# EUROPÄISCHE PATENTSCHRIFT

(11) **EP 0 708 126 B1**
(45) Veröffentlichungstag und Bekanntmachung des Hinweises auf die Patenterteilung: **07.08.2002**
(21) Anmeldenummer: 95116222.1
(22) Anmeldetag: 14.10.1995
(51) Int. Cl.: C08G 18/50, C08G 65/26

(54) **Verfahren zur Herstellung von fogging-armen Polyurethan-Schaumstoffen und hierfür verwendbare spezielle Polyoxyalkylen-polyole**
Process for the preparation of low fogging polyurethane foams and special polyoxyalkylene-polyols suitable therefor
Procédé de préparation de mousses de polyuréthane à faible condensation et polyoxyalkylène-polyols spéciaux adaptés à ce procédé

(30) Priorität: 22.10.1994 DE 4437878
(43) Veröffentlichungstag der Anmeldung: 24.04.1996
(73) Patentinhaber: BASF AKTIENGESELLSCHAFT, 67056 Ludwigshafen (DE)
(72) Erfinder: Horn, Peter, Dr., D-69118 Heidelberg (DE); Jung, Ludwig, D-82291 Mammendorf (DE); Larbig, Harald, Dr., D-67063 Ludwigshafen (DE); Lebkücher, Rolf, Dr., D-68165 Mannheim (DE); Lehr, Gerhard, D-67365 Schwegenheim (DE)

(56) Entgegenhaltungen:
- EP-A- 0 376 602
- EP-A- 0 539 819
- EP-A- 0 632 123
- US-A- 4 230 824
- US-A- 5 130 402
- US-A- 5 336 278
- CHEMICAL ABSTRACTS, vol. 106, no. 8, Februar 1987 Columbus, Ohio, US; abstract no. 50840b, GUETTES ET AL: "AUTOCATALYTIC POLYETHER POLYOL" Seite 14; Spalte 1; XP002017670 & DD-A-235 878 (SYNTHESEWERK SCHWARZHEIDE)

## Beschreibung

Die Erfindung betrifft ein Verfahren zur Herstellung von Polyurethan-Schaumstoffen, im folgenden auch abgekürzt PU-Schaumstoffe genannt, vorzugsweise PU-Halbhart- oder PU-Hartschaumstoffen, mit einer verbesserten Schaumstruktur, die gute Alterungswerte aufweisen und fogging-arm sind und einem sehr guten Fließverhalten der schäumfähigen Reaktionsmischung, durch Umsetzung von organischen Polyisocyanaten (a) mit Polyhydroxylverbindungen (b) und gegebenenfalls Kettenverlängerungsmitteln und/oder Vernetzungsmitteln (c) in Gegenwart von Treibmitteln (d) sowie gegebenenfalls Katalysatoren (e) und Zusatzstoffen (f), wobei erfindungsgemäß als Polyhydroxylverbindungen (b) Polyoxyalkylen-polyole (b1) mit einer Hydroxylzahl von 30 bis 500 verwendet werden, die erhältlich sind durch Polyaddition von mindestens einem Alkylenoxid, vorzugsweise Ethylenoxid und/oder 1,2-Propylenoxid an mindestens ein Startermolekül aus der Gruppe N,N'-Bis-(3-aminopropyl)-ethylen-diamin, Tripropylen-tetramin und Tetrapropylen-pentamin oder ihren technisch erhältlichen Rohprodukten.

Die Erfindung betrifft ferner die erfindungsgemäß verwendbaren neuen tertiäre Aminogruppen als Brückenglieder enthaltende Polyoxyalkylen-polyole (b1).

Die Herstellung von PU-Schaumstoffen durch Umsetzung von organischen Polyisocyanaten mit höhermolekularen Polyhydroxylverbindungen und gegebenenfalls niedermolekularen Kettenverlängerungsund/oder Vernetzungsmitteln in Gegenwart von Katalysatoren und Treibmitteln sowie gegebenenfalls Zusatzstoffen und Hilfsmitteln ist bekannt und wird in zahlreichen Patent- und Literaturpublikationen beschrieben. Beispielhaft genannt sei das Kunststoff-Handbuch, Band VII, Polyurethane, 1. Auflage, 1966, herausgegeben von Dr. R. Vieweg und Dr. A. Höchtlen, Carl Hanser Verlag, München.

Bekannt ist ferner die Herstellung von PU-Halbhartschaumstoffen nach dem Prepolymer-Verfahren, üblicherweise auf der Basis von Toluylen-diisocyanat(TDI)-Prepolymeren, und von PU-Halbhart- und PU-Hartschaumstoffen dem One shot-Verfahren, vorteilhafterweise unter Verwendung von Mischungen aus Diphenylmethan-diisocyanaten (MDI) und Polyphenyl-polymethylen-polyisocyanaten, sogenannten Roh-MDI, als Polyisocyanate. Durch eine gezielte Auswahl von höhermolekularen Polyhydroxylverbindungen und Kettenverlängerungs- und/oder Vernetzungsmitteln und durch unterschiedliche Mengen an Polyisocyanaten und Wasser können nach diesen Verfahren PU-Halbhart- und PU-Hartschaumstoffe mit unterschiedlichen mechanischen Eigenschaften hergestellt werden. PU-Halbhartschaumstoffe können ferner ohne die Mitverwendung von Wasser nach dem Frothing-Verfahren unter Zusatz von Dichlordifluormethan als Treibmittel hergestellt werden. Als Polyhydroxylverbindungen findet hierbei eine Kombination aus verzweigten, höhermolekularen Polyoxyalkylen-polyolen und Amin-gestarteten Kettenverlängerungsmittel mit Hydroxylzahlen im Bereich von 450 bis 500 Verwendung. Aktiviert werden kann die Polyadditionsreaktion durch organische Zinnverbindungen (Kunststoff-Handbuch, Band VII, Polyurethane, 2. Auflage, 1983, herausgegeben von D. G. Oertel, Carl Hanser Verlag, München, Wien).

In der EP-A-0 490 145 werden Verbundelemente beschrieben, die bestehen aus mindestens einer Deckschicht aus Polyvinylchlorid oder einem polyvinylchloridhaltigen Polymerisatgemisch und einem PU-Schaumstoff, vorzugsweise einem PU-Halbhart- oder -Hartschaumstoff.

PU-Schaumstoffe werden zweckmäßigerweise unter Zusatz von tertiären Aminen als Katalysatoren hergestellt, da diese sowohl die Reaktion zwischen den Hydroxylgruppen der Polyhydroxylverbindungen und den NCO-Gruppen der Polyisocyanate, die Urethanbildung, als auch die Umsetzung zwischen Wasser und NCO-Gruppen unter Bildung von Aminogruppen und Kohlendioxid als Treibgas, die Treibreaktion, beschleunigen, wobei insbesondere beim One shot-Verfahren die Geschwindigkeiten der nebeneinander ablaufenden Reaktionen exakt aufeinander abgestimmt sein müssen. Da neben der Polyadditions- und Treibreaktion bei der Schaumstoffbildung noch Vernetzungsreaktionen unter Ausbildung von Allophanat-, Harnstoff-, Biuret- und Cyanuratstrukturen ablaufen können, müssen die eingesetzten Katalysatoren einen synchronen Ablauf dieser verschiedenartigen Umsetzungen gewährleisten. Die Katalysatoren dürfen weder durch eine frühzeitigen Einbau in das Polyurethangerüst ihre katalytische Wirksamkeit verlieren, noch den hydrolytischen Zerfall des hergestellten PU-Schaumstoffs beschleunigen.

Nachteilig ist der unangenehme Geruch vieler in der Praxis als Katalysator verwendeter tertiärer Amine, der sich auf die hergestellten PU-Schaumstoffe übertragen und ihre Verwendung für gewisse Anwendungen negativ beeinflussen kann. Nach Angaben der DE-A-23 21 884 (GB-A-1 344 038) werden daher zur Herstellung von PU-Schaumstoffen mit einem tertiären Amin als Katalysator hergestellte Polyether-polyole in Verbindung mit einer Säure und einem Silikonöl verwendet.

Bekannt sind ferner hochreaktive, tertiäre Aminogruppen gebunden enthaltende Polyoxyalkylen-polyole, die nach Angaben der EP-A-0 539 819 hergestellt werden durch Oxalkylierung eines Startermoleküls, das mindestens zwei reaktive Wasserstoffatome und mindestens eine, über eine Spacerbrücke aus mindestens drei Methylengruppen gebundene tertiäre Aminogruppe gebunden enthält, mit mindestens einem Alkylenoxid. Die hochreaktiven Polyoxyalkylen-polyole, die vorzugsweise eine Funktionalität von 2 oder 3 und ein Molekulargewicht von 2.800 bis 6.200 besitzen und unter Verwendung von N,N-Dimethyl-diaminobutan-1,4, N,N-Dimethyl-diaminpropan-1,3 und N,N-Dimethyl-dipropylen-triamin als Startermoleküle hergestellt werden, finden Verwendung zur Herstellung von kompakten oder zelligen, vorzugsweise flexiblen Polyisocyanat-polyadditionsprodukten. Polyoxyalkylen-polyole dieser Art besitzen eine hohe Katalysatoraktivität in PU-Formulierungen zur Herstellung von PU-Weich- und PU-Halbhartschaumstoffen.

Die Aufgabe der vorliegenden Erfindung bestand darin, den synchronen Ablauf der unterschiedlichen Reaktionen bei der PU-Schaumstoff-, vorzugsweise PU-Halbhart- und PU-Hartschaumstoffherstellung, zu gewährleisten unter Vermeidung einer Geruchsbelästigung beim Schäumprozeß und durch den hergestellten Schaumstoff. Die Neigung zur Lunkerbildung im PU-Schaumstoff sollte reduziert und dadurch die Ausschußrate bei der Hinterschäumung von Armaturentafeln und anderen Verbundelementen, z.B. solchen mit Deckschichten aus Polyvinylchlorid oder anderen polyvinylchloridhaltigen Polymerisatgemischen, drastisch vermindert werden. Durch die Verbesserung der PU-Schaumstruktur sollte das mechanische Eigenschaftsniveau erhöht und über den gesamten PU-Formkörper vereinheitlicht werden. Ferner sollte das Fließverhalten der schäumfähigen Reaktionsmischung erhöht und der Verarbeitungsbereich in bezug auf die Verschäumungsvorrichtungen und -bedingungen, z.B. die Temperaturbedingungen, erweitert werden.

Durch geeignete, mit den PU-Aufbaukomponenten verträgliche Zusatzstoffe sollten die mechanischen Eigenschaften der PU-Schaumstoffe modifiziert werden können. Die PU-Schaumstoffe, vorzugsweise die PU-Halbhart- und PU-Hartschaumstoffe, sollten möglichst vollständig fogging-frei sein.

Diese Aufgabe könnte überraschenderweise gelöst werden durch die teilweise oder ausschließliche Verwendung von ausgewählten, mit aliphatischen Polyaminen gestarteten Polyoxyalkylen-polyolen als Polyhydroxylverbindung.

Gegenstand der Erfindung ist somit ein Verfahren zur Herstellung von PU-Schaumstoffen, vorzugsweise PU-Halbhart- oder PU-Hartschaumstoffen, durch Umsetzung von
a) mindestens einem organischen oder modifizierten organischen Polyisocyanat oder einer Mischung aus einem organischen und modifizierten organischen Polyisocyanat mit
b) mindestens einer höhermolekularen Polyhydroxylverbindung mit mindestens zwei reaktiven Wasserstoffatomen und
c) gegebenenfalls niedermolekularen Kettenverlängerungs- und/oder Vernetzungsmitteln
in Gegenwart von
d) Treibmitteln sowie gegebenenfalls
e) Katalysatoren und
f) Zusatzstoffen,
das dadurch gekennzeichnet ist, daß man als Polyhydroxylverbindungen (b) Polyoxyalkylen-polyole (b1) mit einer Hydroxylzahl von 30 bis 500 verwendet, erhältlich durch Alkoxylierung mindestens eines Startermoleküls aus der Gruppe N,N'-Bis-(3-aminopropyl)-ethylen-diamin, Tripropylen-tetramin und Tetrapropylen-pentamin oder einer Mischung aus mindestens zwei der genannten Startermoleküle mit mindestens einem Alkylenoxid.

Gegenstand der Erfindung sind ferner Polyoxyalkylen-polyole mit einer Hydroxylzahl von 30 bis 500, erhältlich durch Polyaddition von mindestens einem Alkylenoxid an ein Startermolekül aus der Gruppe N,N'-Bis-(3-aminopropyl)-ethylen-diamin, Tripropylen-tetramin und Tetrapropylen-pentamin und an technische Mischungen dieser Startermoleküle.

Die erfindungsgemäß verwendbaren, tertiäre Aminogruppen gebunden enthaltende Polyoxyalkylen-polyole sind katalytisch wirksam und beschleunigen, insbesondere in Kombination mit Carbonsäuren, die Polyadditionsreaktion von organischen Polyisocyanaten und Polyhydroxylverbindungen. Ihr Zusatz in PU-Reaktionsmischungen kann selbst in geringsten Mengen eine beträchtliche Verkürzung der Formstandzeit bei der Herstellung von PU-Formschaumstoffen bewirken. Dieser technische Vorteil, der sich auch durch eine Senkung der Produktionskosten auszahlt, ist insbesondere bei der Herstellung von PU-Hartschaumstoff-Formkörpern von erheblicher Bedeutung. Die erfindungsgemäßen Polyoxyalkylen-polyole sind ausgezeichnete Lösungsmittel für bestimmte Treibmittel, wie z.B. (Cyclo)alkane, insbesondere Cyclohexan, wobei durch deren Zusatz ihre Viskosität sehr stark reduziert werden kann. Bei PU-Hartschaumstoffen kann durch ihren Zusatz die Sprödigkeit reduziert und durch die Mitverwendung von Weichmachern, für die sie Lösungsvermittler sind, die Härte beliebig, d.h. nach den technischen Erfordernissen, eingestellt werden.

Die PU-Schaumstoffe, insbesondere PU-Halbhartschaumstoffe, weisen hervorragende Alterungswerte auf und zeigen kein Ausscheiden flüchtiger Verbindungen.

Reaktionsmischungen zur Herstellung der PU-Schaumstoffe sind sehr gut fließfähig und beeinflußen im Gegensatz zu z.B. mit Ethylendiamin gestarteten Polyoxyalkylen-polyolen die Schäumzeiten nicht nachteilig. Bei den erfindungsgemäß hergestellten geruchlosen PU-Schaumstoffen können trotz einer Reduzierung der Dichte die mechanischen Eigenschaften verbessert werden.

Vorteilhaft und daher erwähnenswert ist die geringe Neigung zur Bildung von Lunkern in den PU-Schaumstoffen. Bei der Hinterschäumung von z.B. Armaturentafeln und anderen Verbundelementen, z.B. solchen mit Deckschichten aus Polyvinylchlorid (PVC) oder anderen PVC-haltigen Polymerisatgemischen, thermoplastischem Polyurethan oder Acrylnitril-Styrol-Acrylatkautschuk (ASA), kann dadurch die Ausschußrate drastisch gesenkt werden.

Zu dem erfindungsgemäßen Verfahren zur Herstellung von PU-Schaumstoffen, vorzugsweise PU-Halbhart- und -Hartschaumstoffen, und den hierzu verwendbaren Ausgangsstoffen ist im einzelnen folgendes auszuführen:
a) Zur Herstellung der PU-Schaumstoffe, vorzugsweise PU-Halbhart- und PU-Hartschaumstoffe, eignen sich die an sich bekannten organischen, z.B. aliphatischen, cycloaliphatischen und vorzugsweise aromatischen Di- und/oder Polyisocyanate (a). Im einzelnen seien als aromatische Polyisocyanate beispielhaft genannt: Mischungen aus 4,4'- und 2,4'-Diphenylmethan-diisocyanat (MDI), Mischungen aus MDI und Polyphenyl-polymethylen-polyisocyanaten (Roh-MDI) mit einem Gehalt an MDI-Isomeren von zweckmäßigerweise mindestens 30 Gew.-%, vorzugsweise von 40 bis 90 Gew.-% und mehr, bezogen auf das Gesamtgewicht der Mischung, 2,4- und 2,6-Toluylen-diisocyanat (TDI) sowie die entsprechenden handelsüblichen Isomerenmischungen, Mischungen aus TDI und MDI und/oder Roh-MDI.
   Als organische Polyisocyanate (a) geeignet sind auch sogenannte modifizierte mehrwertige organische Isocyanate, d.h. Produkte, die durch chemische Umsetzung organischer Di- und/oder Polyisocyanate erhalten werden. Beispielhaft genannt seien Ester-, Harnstoff-, Biuret-, Allophanat-, Isocyanurat- und vorzugsweise Carbodiimid-, Uretonimin- und/oder Urethangruppen enthaltende Di- und/oder Polyisocyanate. Im einzelnen kommen beispielsweise in Betracht: Urethangruppen enthaltende Prepolymere mit einem NCO-Gehalt von 14 bis 2,8 Gew.-%, vorzugsweise von 12 bis 3,5 Gew.-% oder Quasiprepolymere mit einem NCO-Gehalt von 35 bis 14 Gew.-%, vorzugsweise von 34 bis 22 Gew.-%, wobei mit Urethangruppen modifizierte Polyisocyanate aus TDI, insbesondere einen NCO-Gehalt von 34 bis 28 Gew.-% und solche aus 4,4'-MDI, 4,4'- und 2,4'-MDI-Isomerenmischungen oder Roh-MDI, insbesondere einen NCO-Gehalt von 28 bis 22 Gew.-%, bezogen auf das Gesamtgewicht, aufweisen und hergestellt werden durch Umsetzung von Diolen, Oxalkylen-glykolen und/oder Polyoxyalkylen-glykolen mit Molekulargewichten von 62 bis 6 000, vorzugsweise von 134 bis 4 200 mit TDI, 4,4'-MDI, MDI-Isomerengemischen und/oder Roh-MDI z.B. bei Temperaturen von 20 bis 110°C, vorzugsweise von 50 bis 90°C, wobei als Oxalkylen- und Polyoxyalkylen-glykole, die einzeln oder als Gemisch eingesetzt werden können, beispielhaft genannt seien: Diethylen-, Dipropylen-, Polyoxyethylen-, Polyoxypropylen- und Polyoxypropylen-polyoxyethylen-glykole, Carbodiimidgruppen und/oder Isocyanuratgruppen enthaltende Polyisocyanate, z.B. auf MDI-Isomeren- und/oder TDI-Basis.
   Besonders bewährt haben sich jedoch und daher vorzugsweise Anwendung finden Mischungen aus 4,4'- und 2,4'-MDI, Roh-MDI mit einem Gehalt an MDI von mindestens 30 Gew.-%, bezogen auf das Gesamtgewicht, Mischungen aus 4,4'- und 2,4'-MDI und Gemischen aus 2,4- und 2,6-TDI, Mischungen aus Roh-MDI und Gemischen aus 2,4- und 2,6-TDI, Urethangruppen enthaltende Polyisocyanatmischungen mit einem NCO-Gehalt von 28 bis 14 Gew.-%, bezogen auf das Gesamtgewicht, auf der Grundlage von MDI und/oder Roh-MDI.
   Die erfindungsgemäß verwendbaren organischen Polyisocyanate können nach bekannten Verfahren, beispielsweise durch Umsetzung der entsprechenden Polyamine mit Phosgen zu intermediär gebildeten Carbamidsäurechloriden und deren thermische Spaltung zu Polyisocyanaten oder nach phosgenfreien Methoden, beispielsweise durch Umsetzung der entsprechenden Polyamine mit Harnstoff und/oder Carbaminsäureestern und Alkoholen zu monomeren Polyurethanen und deren thermische Spaltung zu Polyisocyanaten und Alkoholen, hergestellt werden.
b) Als höhermolekulare Polyhydroxylverbindungen (b) finden erfindungsgemäß Polyoxyalkylen-polyole (b1) mit einer Hydroxylzahl von 30 bis 500, vorzugsweise von 200 bis 450 und insbesondere von 250 bis 410 Verwendung, die erhältlich sind durch Alkoxylierung mindestens eines Startermoleküls aus der Gruppe N,N'-Bis-(3-aminopropyl)-ethylen-diamin, Tripropylen-tetramin und Tetrapropylen-pentamin oder einer Mischung aus mindestens zwei der genannten Startermoleküle.
   Die genannten Startermoleküle können als chemisch reine Verbindungen mit einer Funktionalität von 6 bis 8, als technisch erhältliche Verbindungen oder in Form einer technisch erhältlichen, mit anderen Polyaminen verunreinigten Mischung verwendet werden. Vorzugsweise eingesetzt werden als Tripropylen-tetramin technisch erhältliche Tripropylen-tetramin-Mischungen, die enthalten Polyamine der Formeln

   H₂N―CH₂CH₂CH₂―NH―CH₂CH₂CH₂―NH₂,

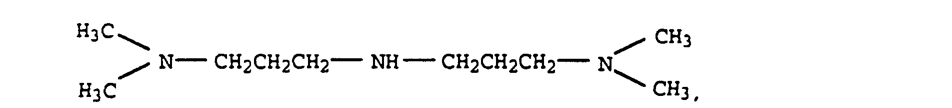

   N(CH₂CH₂CH₂NH₂)₃,

   H₂N―CH₂CH₂CH₂―NH―CH₂CH₂CH₂―NH―CH₂CH₂CH₂NH₂

   und

   CH₃CH₂CH₂―NH―CH₂CH₂CH₂―NH―CH₂CH₂CH₂―NH―CH₂CH₂CH₃

   und als Tetrapropylen-pentamine technische erhältliche Tetrapropylen-pentamin-Mischungen, die enthalten

   N(CH₂CH₂CH₂―NH₂)₃,

   H₂N―(CH₂)₃―NH―(CH₂)₃―NH―(CH₂)₃―NH₂

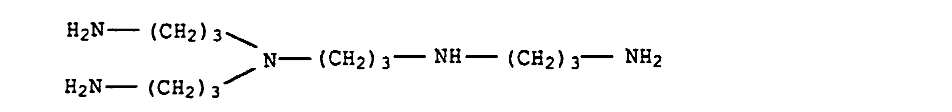

   H₂N―(CH₂)₃―NH―(CH₂)₃―NH―(CH₂)₃―NH―(CH₂)₃―NH₂

   und 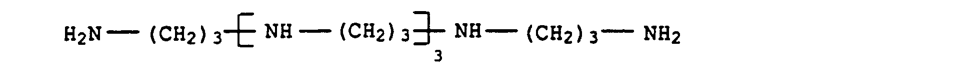
   Die erfindungsgemäß verwendbaren Polyoxyalkylen-polyole (b1) können nach bekannten Verfahren beispielsweise durch anionische Polymerisation von einem oder mehreren Alkylenoxiden mit 2 bis 4 Kohlenstoffatomen in Gegenwart mindestens eines der genannten Startermoleküle in Abwesenheit oder vorzugsweise Gegenwart eines Katalysators, wie z.B. eines Alkalihydroxids, wie Natrium- oder Kaliumhydroxid, oder eines Alkalialkoholats, wie Natriummethylat, Natrium- oder Kaliumethylat oder Kaliumisopropylat, hergestellt werden. Nach einer speziellen Herstellungsvariante kann die Alkoxylierung zunächst in Abwesenheit von Katalysatoren durchgeführt werden und die basischen Katalysatoren können der Reaktionsmischung mit zunehmendem Molekulargewicht der gebildeten erfindungsgemäßen Polyoxyalkylen-polyole einverleibt werden. Geeignete Alkylenoxide sind beispielsweise 1,2- bzw. 2,3-Butylenoxid, Styroloxid und vorzugsweise Ethylenoxid und/oder 1,2-Propylenoxid. Die Alkylenoxide können hierzu einzeln, alternierend nacheinander oder als Mischung verwendet werden.
   Zur Herstellung der PU-Schaumstoffe, vorzugsweise PU-Halbhart- und PU-Hartschaumstoffe, können die erfindungsgemäßen Polyoxyalkylen-polyole (b1) als einzige höhermolekulare Polyhydroxylverbindung (b) verwendet werden. Zur Modifizierung der mechanischen Eigenschaften der PU-Schaumstoffe oder aus verarbeitungstechnischen Gründen kann es jedoch zweckmäßig sein, als Polyhydroxylverbindungen (b) Mischungen zu verwenden, die enthalten mindestens ein erfindungsgemäßes Polyoxyalkylen-polyol (b1) und mindestens eine zusätzliche Polyhydroxylverbindung (b2) mit einer Funktionalität von 2 bis 8, insbesondere von 2 bis 3 für PU-Halbhartschaumstoffe und 3 bis 6 für PU-Hartschaumstoffe und einer Hydroxylzahl von 15 bis 500, vorzugsweise einer Hydroxylzahl von 24 bis 280 für PU-Halbhartschaumstoffe und von größer 280 bis 500 und mehr für PU-Hartschaumstoffe, wobei Polyoxyalkylen-polyole gemäß (b1) ausgenommen sind.
   Die als Polyhydroxylverbindungen (b) vorzugsweise verwendeten Mischungen aus (b1) und (b2) besitzen eine Hydroxylzahl von 30 bis 500 und enthalten zweckmäßigerweise, bezogen auf das Gesamtgewicht von (b1) und (b2), 0,1 bis 50 Gew.-%, vorzugsweise 0,5 bis 30 Gew.-% und insbesondere 1 bis 10 Gew.-% (b1) und 99,9 bis 50 Gew.-%, vorzugsweise 99,5 bis 70 Gew.-% und insbesondere 99 bis 90 Gew.-% (b2).
   Als höhermolekulare Polyhydroxylverbindungen (b2) bewährt haben sich beispielsweise von (b1) verschiedene Polyoxyalkylen-polyole, Polyester-polyole, vorteilhafterweise solche hergestellt aus Alkandicarbonsäuren und mehrwertigen Alkoholen, Polythioether-polyole, Polyesteramide, hydroxylgruppenhaltige Polyacetale, hydroxylgruppenhaltige, vorzugsweise aliphatische Polycarbonate oder Mischungen aus mindestens zwei der genannten Polyhydroxylverbindungen. Vorzugsweise Anwendung finden Polyester-polyole und/oder insbesondere Polyoxyalkylen-polyole, deren Kenndaten nicht unter die Definition von (b1) fallen.
   Derartige Polyoxyalkylen-polyole (b2) können nach bekannten Verfahren, beispielsweise durch anionische Polymerisation mit Alkalihydroxiden oder Alkoholaten als Katalysatoren und unter Zusatz mindestens eines Startermoleküls, das 2 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide hierfür sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure und vorzugsweise mehrwertige, insbesondere zwei- bis achtwertige Alkohole oder Dialkylenglykole, wie z.B. Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Sucrose.
   Die Polyoxyalkylen-polyole, vorzugsweise Polyoxypropylen- und Polyoxypropylen-polyoxyethylen-polyole besitzen zur Herstellung der PU-Halbhartschaumstoffe zweckmäßigerweise eine Funktionalität von vorzugsweise 2 bis 4 und insbesondere von 2 bis 3 und Hydroxylzahlen vorzugsweise von 24 bis 160 und geeignete Polyoxytetramethylenglykole, üblicherweise eine Hydroxylzahl von 37 bis 160.
   Als Polyhydroxylverbindungen (b2) vorzüglich bewährt haben sich z.B. Polyoxyalkylen-polyole (b2) oder -gemische mit einer Funktionalität von 2 bis 4, vorzugsweise 2 bis 3 und einer Hydroxylzahl von 15 bis 300, vorzugsweise 15 bis 280 und insbesondere von 18 bis 260, die hergestellt werden durch Polyaddition von Ethylenoxid, 1,2-Propylenoxid oder Mischungen aus Ethylenoxid mit 1,2-Propylenoxid an mindestens ein Startermolekül der Formel 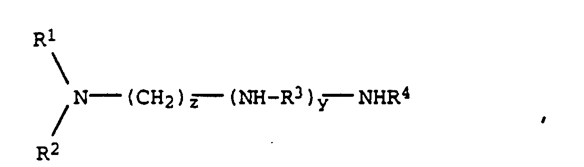 in der bedeuten
   - R¹ und R²: gleiche oder verschiedene, lineare oder verzweigte C₁- bis C₄-Alkylreste,
   beide Reste gemeinsam einen C₄- bis C₆-Cycloalkylenrest, der anstelle einer Methylengruppe ein -O- oder -NR⁵-Brückenglied enthalten kann, in dem R⁵ ein C₁- bis C₄-Alkylrest ist, oder
   gleiche oder verschiedene Dialkylaminoalkylreste der Formel 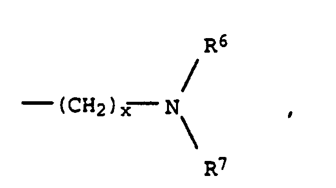 in der R⁶ und R⁷ gleiche oder verschiedene, lineare oder verzweigte C₁- bis C₄-Alkylreste oder beide Reste gemeinsam ein C₄- bis C₆-Cycloalkylenrest sind, der anstelle einer Methylengruppe ein -O- oder -NR⁵- Brückenglied gebunden enthalten kann und X eine ganze Zahl von mindestens 3 ist,
   - z: eine ganze Zahl von mindestens 3,
   - R³: eine C₂- bis C₄-Alkylengruppe,
   - y: null oder eine Zahl von 1 bis 3 und
   - R⁴: Wasserstoff oder einen C₁- bis C₄-Alkylrest mit der Maßgabe, daß für y gleich null R⁴ Wasserstoff ist.

   Bevorzugte Polyoxyalkylen-polyole (b2) mit einer Funktionalität von 2 bis 3 und einer Hydroxylzahl von 15 bis 300, insbesondere von 18 bis 260 können z.B. hergestellt werden durch Polyaddition mindestens eines Alkylenoxids, vorzugsweise von Ethylenoxid, 1,2-Propylenoxid oder Mischungen aus Ethylenoxid und 1,2-Propylenoxid, an ein Startermolekül aus der Gruppe N,N-Dimethyl-diaminopropan-1,3, N,N-Dimethyl-diaminobutan-1,4 und insbesondere N,N-Dimethyl-dipropylen-triamin. Derartige hochreaktive Polyoxyalkylen-polyole (b2), bei denen die tertiäre Aminogruppe über eine Spacerbrücke aus mindestens 3 Methylenresten an die mit Alkylenoxid reagierenden -NH- und/oder -NH₂-Gruppen gebunden ist, werden beschrieben in der DE-A-41 35 588, deren gesamte Offenbarung als Bestandteil der Erfindungsbeschreibung zu betrachten ist.
   Als Polyhydroxylverbindungen (b2) bevorzugt sind ferner Blockpolyoxypropylen-polyoxyethylen-polyole (b2) oder -gemische mit einer Hydroxylzahl von 15 bis 65 und vorzugsweise von 24 bis 40 und einem Gehalt an endständig gebundenen Ethylenoxideinheiten von 2 bis 9 Gew.-%, vorzugsweise 3 bis 8 Gew.-% und insbesondere 5 bis 7 Gew.-%, bezogen auf das Gewicht der Polyoxypropyleneinheiten, die hergestellt werden durch anionische Polymerisation bei erhöhten Temperaturen von 1,2-Propylenoxid an eine Startermolekülmischung mit einer durchschnittlichen Funktionalität von 2,3 bis 2,8, vorzugsweise von 2,3 bis 2,7 und insbesondere von 2,5 bis 2,7, die besteht aus Wasser und Glycerin und/oder Trimethylolpropan und Polymerisation von Ethylenoxid an das erhaltene Polyoxypropylenaddukt. Blockpolyoxypropylen-polyoxyethylen-polyole (b2) der genannten Art sind bekannt aus den EP-A-433 878 und EP-A-433 889, deren Gesamtbeschreibungen als Bestandteil der Erfindungsbeschreibung zu betrachten sind.
   Als Polyhydroxylverbindungen (b2) eignen sich ferner polymermodifizierte Polyoxyalkylen-polyole (b2), vorzugsweise Pfropf-polyoxyalkylen-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyoxyalkylen-polyolen analog den Angaben der deutschen Patentschriften 11 11 934, 12 22 669 (US 3 304 273, 3 383 351, 3 523 093), 11 52 536 (GB 10 40 452) und 11 52 537 (GB 987 618) hergestellt werden, sowie Polyoxyalkylen-polyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyoxyalkylen-polyole (b2) können einzeln oder in Form von Mischungen verwendet werden.
   Als Polyhydroxylverbindungen (b2) verwendet werden können ferner Polyester-polyole, die beispielsweise aus Alkandicarbonsäuren mit 2 bis 12 Kohlenstoffatomen, vorzugsweise Alkandicarbonsäuren mit 4 bis 6 Kohlenstoffatomen oder Mischungen aus Alkandicarbonsäuren und/oder aromatischen Polycarbonsäuren und mehrwertigen Alkoholen, vorzugsweise Diolen, mit 2 bis 12 Kohlenstoffatomen, vorzugsweise 2 bis 6 Kohlenstoffatomen und/oder Alkylenglykolen hergestellt werden können. Als Alkandicarbonsäuren kommen beispielsweise in Betracht: Bernsteinsäure, Glutarsäure, Adipinsäure, Korksäure, Azelainsäure, Sebacinsäure und Decandicarbonsäure. Geeignete aromatische Polycarbonsäuren sind z.B. Phthalsäure, Isophthalsäure und Terephthalsäure. Die Alkandicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäuremono- oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35:35 bis 50:20 bis 32 Gew.-Teilen, und insbesondere Adipinsäure. Beispiele für zwei- und mehrwertige Alkohole, insbesondere Diole oder Alkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die Mischungen aus aromatischen und aliphatischen Dicarbonsäuren und vorzugsweise Alkandicarbonsäuren und/oder -derivaten und mehrwertigen Alkoholen katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 4, insbesondere 2 bis 3 und eine Hydroxylzahl von 24 bis 200, vorzugsweise 32 bis 140 und insbesondere 40 bis 94.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen z.B. solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
c) Zur Herstellung der PU-Schaumstoffe nach dem erfindungsgemäßen Verfahren können zusätzlich zu den höhermolekularen Polyhydroxylverbindungen (b) gegebenenfalls auch niedermolekulare, difunktionelle Kettenverlängerungsmittel, niedermolekulare, tri- oder höherfunktionelle, vorzugsweise trioder tetrafunktionelle Vernetzungsmittel oder Mischungen aus Kettenverlängerungs- und Vernetzungsmittel verwendet werden.
   Als derartige Kettenverlängerungs- und Vernetzungsmittel (c) eignen sich z.B. Diole, wie (Cyclo)alkandiole und Dialkylenglykole und/oder höherwertige Alkohole, vorzugsweise Triole und Quadrole, mit Molekulargewichten kleiner als 400, vorzugsweise von 60 bis 300. In Betracht kommen beispielsweise aliphatische, cycloaliphatische und/oder araliphatische Diole mit 2 bis 14 Kohlenstoffatomen, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon und Triole, wie 1,2,4-, 1,3,5-Trihydroxy-cyclohexan, Glycerin und Trimethylolpropan. Als Kettenverlängerungs- und Vernetzungsmittel geeignet sind ferner niedermolekulare hydroxylgruppenhaltige Polyalkylenoxide mit Molekulargewichten bis 400 auf Basis von Ethylen- und/oder 1,2-Propylenoxid und den beispielhaft genannten Diolen und/oder Triolen als Startermoleküle.
   Sofern Mischungen aus höhermolekularen Polyhydroxylverbindungen (b) und Kettenverlängerungs- und/oder Vernetzungsmitteln (c) Anwendung finden, z.B. zur Modifizierung der mechanischen Eigenschaften, beispielsweise der Härte, enthalten diese die Kettenverlängerungs- und/oder Vernetzungsmittel (c) zweckmäßigerweise in einer Menge von 0,5 bis 20 Gew.-%, vorzugsweise von 10 bis 15 Gew.-%, bezogen auf das Gesamtgewicht, wobei der Alkaliionengehalt der Mischung üblicherweise kleiner als 10 ppm, vorzugsweise kleiner als 5 ppm und insbesondere kleiner als 3 ppm ist.
   Als Vernetzungsmittel (c) in Betracht kommen auch solche mit einem hohen Gehalt an Alkaliionen, vorzugsweise Kaliumionen, z.B. von 150 ppm bis 1200 ppm, vorzugsweise 150 ppm bis 800 ppm und insbesondere von 400 bis 600 ppm.
d) Zu Treibmitteln (d), welche zur Herstellung der PU-Schaumstoffe, vorzugsweise PU-Halbhart- und Hartschaumstoffe, verwendet werden können, gehört vorzugsweise Wasser, das mit Isocyanatgruppen unter Bildung von Kohlendioxid reagiert. Die Wassermengen, die zweckmäßigerweise eingesetzt werden, betragen 0,1 bis 8 Gew.-Teile, vorzugsweise 1,5 bis 5,0 Gew.-Teile und insbesondere 2,5 bis 3,5 Gew.-Teile, bezogen auf 100 Gew.-Teile der Polyhydroxylverbindungen (b) bzw. der Mischungen aus höhermolekularen Polyhydroxylverbindungen (b) und Kettenverlängerungs- und/oder Vernetzungsmitteln.
   Im Gemisch mit Wasser oder als alleinige Treibmittel können auch physikalisch wirkende Treibmittel eingesetzt werden. Geeignet sind Flüssigkeiten, welche gegenüber den organischen, gegebenenfalls modifizierten Polyisocyanaten (a) inert sind und Siedepunkte unter 100°C, vorzugsweise unter 50°C, insbesondere zwischen -50°C und 40°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie z.B. n- und iso-Pentan, vorzugsweise technische Gemische aus n-und iso-Pentanen, n- und iso-Butan, n- und iso-Propan, Cycloalkane, wie z.B. Cyclohexan und Cyclopentan, Ether, wie z.B. Furan, Dimethylether und Diethylether, Ketone, wie z.B. Aceton und Methylethylketon, Carbonsäurealkylester, wie z.B. Methylformiat, Dimethyloxalat und Ethylacetat und halogenierte Kohlenwasserstoffe, wie z.B. Methylenchlorid, Dichlormonofluormethan, Difluormethan, Difluorchlormethan, Trifluormethan, Difluorethan, Tetrafluorethan, Heptafluorpropan, 1-Chlor-2,2-difluorethan (142), 1-Chlor-1,1-difluorethan (142b) und 1-Chlor-1,2-difluorethan (142a). Auch Gemische dieser niedrigsiedenden Flüssigkeiten untereinander z.B. aus Difluorchlormethan und 142b und/oder mit anderen substituierten oder unsubstituierten Kohlenwasserstoffen können verwendet werden.
   Die erforderliche Menge bzw. die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 25 Gew.-Teile, vorzugsweise 1 bis 25 Gew.-Teile, insbesondere 2 bis 15 Gew.-Teile pro 100 Gew.-Teile der Polyhydroxylverbindungen (b). Gegebenenfalls kann es zweckmäßig sein, die gegebenenfalls modifizierten Polyisocyanate (a) mit dem inerten physikalisch wirkenden Treibmittel zu mischen und dadurch die Viskosität zu verringern.
e) Die PU-Schaumstoffe können nach dem erfindungsgemäßen Verfahren in Abwesenheit von üblichen Aminkatalysatoren hergestellt werden. Zweckmäßigerweise wird die Reaktion jedoch in Gegenwart von üblichen Katalysatoren (e), die die Reaktion der organischen und/oder organischen modifizierten Polyisocyanate (a) mit den Polyhydroxylverbindungen (b) und Kettenverlängerungs- und/oder Vernetzungsmitteln (c) stark beschleunigen, durchgeführt. Als Katalysatoren in Betracht kommen z.B. Alkalimetallsalze von Monocarbonsäuren mit linearen oder verzweigten Alkylresten mit 1 bis 20 C-Atomen, vorzugsweise 1 bis 18 C-Atomen und/oder Dicarbonsäuren mit linearen oder verzweigten Alkylresten mit 2 bis 20 C-Atomen, vorzugsweise 2 bis 12 C-Atomen, wie z.B. Kaliumformiat, Kaliumacetat, Kaliumoctoat, Kaliummaleinat und Dikaliumadipat und organische Metallverbindungen, vorzugsweise organische Zinnverbindungen, wie z.B. Zinn-(II)-salze von organischen Carbonsäuren, z.B. Zinn-(II)-diacetat, Zinn-(II)-dioctoat, Zinn-(II)-diethylhexoat und Zinn-(II)-dilaurat und die Dialkylzinn-(IV)-salze von organischen Carbonsäuren, z.B. Dibutyl-zinndiacetat, Dibutylzinn-dilaurat, Dibutylzinn-maleat und Dioctylzinndiacetat. Derartige Katalysatoren werden z.B. in der DE-A-3 048 529 beschrieben. Als gut geeignet haben sich auch Dialkylzinn(IV)-mercaptoverbindungen erwiesen, wie z.B. Bislaurylzinn(IV)-dimercaptid.
   Die Katalysatoren werden üblicherweise in einer Menge von 0,001 bis 0,2 Gew.-Teilen, vorzugsweise 0,005 bis 0,015 Gew.-Teilen pro 100 Gew.-Teile der Aufbaukomponenten (a) bis (c) verwendet.
f) Der Reaktionsmischung zur Herstellung der PU-Schaumstoffe, vorzugsweise PU-Halbhart- und -Hartschaumstoffe, können gegebenenfalls auch Zusatzstoffe (e) einverleibt werden. Genannt seien beispielsweise Säuren, Weichmacher, oberflächenaktive Substanzen, Schaumstabilisatoren, Zellregler, Füllstoffe, Antioxidantien, Farbstoffe, Pigmente, Flammschutzmittel, Hydrolyseschutzmittel, fungistatisch und bakteriostatisch wirkende Substanzen.
   Zur Herstellung der PU-Schaumstoffe nach dem erfindungsgemäßen Verfahren können als bevorzugter Zusatzstoff (f) anorganische Säuren, organische Säuren oder Mischungen aus anorganischen und organischen Säuren Verwendung finden. Als anorganische Säuren haben sich beispielsweise Polyphosphorsäuren, ein- und mehrwertige Phosphorsäuren, vorzugsweise Triphosphorsäure und Salzsäure bewährt. Vorzugsweise Verwendung finden organische Säuren, insbesonders solche aus der Gruppe der Monocarbonsäuren, Polycarbonsäuren, vorzugsweise Dicarbonsäuren und aromatischen Sulfonsäuren. Als organische Säuren beispielhaft genannt seien Mono- und Dicarbonsäuren, wie z.B. Ameisensäure, Essigsäure, Propionsäure und vorzugsweise Ricinolsäure, Hydroxystearinsäuren, Oxalsäure, Bernsteinsäure, Maleinsäure, Fumarsäure, Weinsäure, Citronensäure, Adipinsäure, Benzoesäure, Phthalsäure, Terephthalsäure und Isophthalsäure, und Sulfonsäuren wie z.B. Benzolsulfonsäure und p-Toluolsulfonsäure. Die anorganischen und/oder organischen Säuren werden in Abhängigkeit von ihrem pKs-Wert und Molekulargewicht sowie der Basizität der Polyhydroxylverbindungen (b) üblicherweise in einer Menge von 0,1 bis 20 Gew.-Teilen, bezogen auf 100 Gew.-Teile Polyhydroxylverbindung (b) verwendet, wobei die exakten Gewichtsmengen durch einfache Handversuche ermittelt werden können.
   Als organische Säuren insbesondere bewährt haben sich langkettige Fettsäuren wie z.B. Ricinolsäure und Hydroxyfettsäuren, z.B. Hydroxystearinsäuren, die aus natürlichen Ölen gewonnen werden können, und durch Epoxidierung der ungesättigten Doppelbindungen und Addition von ein- und/oder mehrwertigen Alkoholen an die Epoxidgruppe zu Hydroxyfettsäuren umgesetzt werden können. Derartige hydroxylgruppenhaltige organische Säuren haben sich insbesondere in Kombination mit Vernetzern (c) mit einem hohen Gehalt an Alkaliionen bewährt, da diese Kombination eine hervorragende Emulgierwirkung aufweist und PU-Schaumstoffe mit äußerst homogener Schaumstruktur gibt. Bei Verwendung eines Vernetzers (c) mit einem Alkaliionengehalt von kleiner als 10 ppm wird in Verbindung mit den organischen Säuren die Startzeit der Reaktionsmischung verlängert.
   Als Zusatzstoff (f) bewährt haben sich auch Weichmacher, die u.a. das Fließverhalten der Reaktionsmischung verbessern. Hierfür geeignet sind z.B. Weichmacher aus der Gruppe der Dialkylphthalate, z.B. solche mit 4 bis 20 Kohlenstoffatomen, vorzugsweise 9 bis 11 Kohlenstoffatomen im Alkylrest. Derartige Weichmacher sind unter dem Warenzeichen Palatinol® der BASF Aktiengesellschaft käuflich erwerbbar. Als Weichmacher verwendbar sind ferner Phosphate, wie z.B. Trikresylphosphat, Phenyldikresylphosphat u.a., die gleichzeitig die Flammwidrigkeit der PU-Schaumstoffe verbessern.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxyalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Polyhydroxylverbindungen (b) und Kettenverlängerungs- und/oder Vernetzungsmittel (c), angewandt.
   Als Füllstoffe, insbesondere verstärkend wirkende Füllstoffe, sind die an sich bekannten, üblichen organischen und anorganischen Füllstoffe und Verstärkungsmittel, zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Zeolithe, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.
   Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), einverleibt.
   Geeignete Flammschutzmittel sind beispielsweise Trikresylphosphat, Tris-(2-chlorethyl)phosphat, Tris-(2-chlorpropyl)phosphat, Tris-(1,3-dichlorpropyl)phosphat, Tris-(2,3-dibrompropyl)phosphat und Tetrakis-(2-chlorethyl)-ethylendiphosphat. Außer den bereits genannten halogensubstituierten Phosphaten können auch anorganische Flammschutzmittel, wie roter Phosphor, Aluminiumoxidhydrat, Antimontrioxid, Ammoniumsulfat, Ammoniumpolyphosphat und Calciumsulfat, Blähgraphit, Harnstoff oder Cyanursäurederivate, wie z.B. Melamin, Melamincyanurat oder Mischungen aus mindestens zwei Flammschutzmitteln, wie z.B. Ammoniumpolyphosphaten und Melamin sowie gegebenenfalls Blähgraphit und/oder Stärke zum Flammfestmachen der erfindungsgemäß hergestellten PU-Schaumstoffe, verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.
   Als Antioxidation können z.B. nicht flüchtige Kryptophenole, wie z.B. die Handelsprodukte Irganox® 245 oder Irganox® 1135 der Ciba-Geigy oder sterisch gehinderte Amine, wie z.B. das Handelsprodukt Naugard® 445 der Firma Uniroyal verwendet werden.
   Nähere Angaben über die oben genannten anderen üblichen Hilfsmittel sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Schaumstoffe, vorzugsweise der PU-Halbhart- und -Hartschaumstoffe, werden die organischen, gegebenenfalls modifizierten Polyisocyanate (a), die Polyhydroxylverbindungen (b) und gegebenenfalls Kettenverlängerungs- und/oder Vernetzungsmittel (c) in Gegenwart der Treibmittel (d), gegebenenfalls Katalysatoren (e) und gegebenenfalls Zusatzstoffe (f) üblicherweise bei Temperaturen von 0 bis 120°C, vorzugsweise 15 bis 100°C und insbesondere 18 bis 80°C zweckmäßigerweise in solchen Mengen zur Reaktion gebracht, daß pro NCO-Gruppe vorteilhafterweise 0,5 bis 2, vorzugsweise 0,8 bis 1,3 und insbesondere ungefähr eine Hydroxylgruppe gebunden an (b) oder (b) und (c) vorliegen. Bei ausschließlicher oder teilweiser Verwendung von Wasser als Treibmittel hat es sich als zweckmäßig erwiesen, ein Verhältnis von Äquivalente Wasser zu Äquivalente NCO-Gruppe im Bereich von vorteilhafterweise 0,5 bis 5:1, vorzugsweise 0,7 bis 0,95:1 und insbesondere 0,75 bis 0,85:1 einzustellen. Zur Herstellung von PU-Schaumstoffen mit Isocyanuratgruppen hat sich z.B. ein Verhältnis von NCO-:OH-Gruppen von 2 bis 25:1, vorzugsweise 2 bis 10:1 und insbesondere 2 bis 5:1 bewährt.

Die PU-Schaumstoffe, vorzugsweise die PU-Halbhart- und -Hartschaumstoffe, werden zweckmäßigerweise nach dem one shot-Verfahren durch Vermischen von zwei Komponenten A und B hergestellt, wobei üblicherweise die Ausgangskomponenten (b) und (d) sowie gegebenenfalls (c), (e) und (f) zu der sogenannten A-Komponente vereinigt und als B-Komponente die organischen und/oder modifizierten organischen Polyisocyanate (a) gegebenenfalls im Gemisch mit inerten, physikalisch wirkenden Treibmitteln verwendet werden. Die A- und B-Komponenten müssen vor Herstellung der PU-Schaumstoffe nur noch intensiv gemischt werden. Die Reaktionsmischung kann in offenen oder geschlossenen Formwerkzeugen verschäumt und aushärten gelassen werden. Ferner können vorgefertigte Bezugsmaterialien zu Formteilen hinterschäumt werden.

Das erfindungsgemäße Verfahren eignet sich insbesondere auch zur Herstellung von PU-Formschaumstoffen. Die Reaktionsmischung wird hierzu mit einer Temperatur von 15 bis 80°C, vorzugsweise 30 bis 65°C in ein zweckmäßigerweise metallisches, temperierbares Formwerkzeug eingebracht. Die Formwerkzeugtemperatur beträgt üblicherweise 20 bis 90°C, vorzugsweise 35 bis 70°C. Die Reaktionsmischung läßt man üblicherweise drucklos oder unter Verdichtung z.B. bei Verdichtungsgraden von 1,1 bis 8, vorzugsweise von 2 bis 6 und insbesondere 2,2 bis 4 in dem geschlossenen Formwerkzeug aushärten.

Die nach dem erfindungsgemäßen Verfahren hergestellten PU-Schaumstoffe besitzen üblicherweise Dichten von 0,025 bis 0,25 g/cm³, vorzugsweise von 0,035 bis 0,08 g/cm³, wobei die Formschaumstoffe, beispielsweise solche mit einem zelligen Kern und einer verdichteten Randzone, in Abhängigkeit vom angewandten Verdichtungsgrad auch Dichten von 0,08 bis 0,75 g/cm³, vorzugsweise von 0,2 bis 0,6 g/cm³ aufweisen können. Die nach dem erfindungsgemäßen Verfahren hergestellten PU-Schaumstoffe sind, wie bereits ausgeführt wurde, im wesentlichen geruchlos, zeigen eine gleichmäßige, im wesentlichen lunkerfreie Zellstruktur und besitzen ein gleichmäßig hohes mechanisches Eigenschaftsniveau.

Die Reaktionsmischungen zur Herstellung der PU-Schaumstoffe finden z.B. Verwendung in der Fahrzeug-, beispielsweise Automobil-, Flugzeug- und Schiffsbauindustrie, der Kühlmöbel- und Bauindustrie zum Ausschäumen und Hinterschäumen von Hohlräumen, z.B. von Armaturen- und Schalttafeln, als Zwischenschicht für Sandwichelemente oder zum Ausschäumen von Kühlschrank- und Kühltruhengehäuse. Die PU-Schaumstoffe eignen sich als Isoliermaterialien, z.B. als Isolierschalen für Rohrleitungen oder Heizungen. Sie finden ferner Verwendung als Wandverkleidungen, Gehäuseteile, Polstermaterialien, Armlehnen, Kopfstützen, Sonnenblenden, Ablagebehälter oder -fächer und Sicherheitsabdeckungen sowie als Handschuhkasten und Mittelkonsole.

### Beispiele

### Beispiel 1

A-Komponente: Mischung, die bestand aus
- 33,85 Gew.-Teilen: eines Blockpolyoxypropylen-polyoxyethylen-polyols mit einer Hydroxylzahl von 30 und einem Gehalt an endständig gebundenen Ethylenoxideinheiten von 5,9 Gew.-%, bezogen auf das Gewicht der Propylenoxideinheiten, erhalten durch Alkoxylierung einer Startermolekülmischung aus Glycerin und Wasser im Gewichtsverhältnis 1:0,98,
- 0,25 Gew.-Teilen: eines mit Glycerin gestarteten Polyoxyethylen (62,5 Gew.-%)-polyoxypropylen(27,5 Gew.-%)-polyoxyethylen(10 Gew.-%)-polyols mit einer Hydroxylzahl von 42,
- 35,00 Gew.-Teilen: eines mit 1,2-Propylen-glykol gestarteten Polyoxypropylen(81,5 Gew.-%)-polyoxyethylen (18,5 Gew.-%)-glykols mit einer Hydroxylzahl von 29,
- 6,00 Gew.-Teilen: eines mit N,N'-Bis-(3-aminopropyl)-ethylendiamin gestarteten Polyoxypropylen-polyols mit der Hydroxylzahl von 393,
- 1,6 Gew.-Teilen: Ricinolsäure,
- 20,0 Gew.-Teilen: eines Di-(C₉- bis C₁₁-alkyl)phthalats,
- 2,2 Gew.-Teilen: Wasser,
- 0,45 Gew.-Teilen: einer 40 gew.-%igen Kaliumacetatlösung in Ethylenglykol,
- 0,40 Gew.-Teilen: Schwarzpaste und
- 1,0 Gew.-Teilen: eines sterisch gehinderten Amins als Antioxidans (Naugard® 445).

B-Komponente: Mischung aus Diphenylmethan-diisocyanat-Isomeren und Polyphenyl-polymethylen-polyisocyanaten mit einem NCO-Gehalt von 31,3 Gew.-% und einem Diphenylmethan-diisocyanat-Isomerengehalt von 39 Gew.-%, bezogen auf das Gesamtgewicht.

Hinterschäumung einer Armaturentafel für ein Kraftfahrzeug:

Verwendung hierzu fand eine Hennecke-Schäumapparatur mit einem Mischkopf MQ der Drosseleinstellung 5, Düsen mit einem Durchmesser von 1,3 mm für die A-Komponente und von 0,8 mm für die B-Komponente sowie einer Austragsleistung von 223 g/Sekunden. Die Schußzeit betrug 4,2 bis 5,05 Sekunden, was einer Austragsleistung von 920 g bis 1.126 g entspricht.

Zur Hinterschäumung der Armaturentafel wurde die Deckfolie aus PVC/ABS in ein auf 40 bis 43°C temperiertes metallisches Formwerkzeug eingelegt, das Formwerkzeug geschlossen, die A- und B-Komponenten mit einer Temperatur von 30°C und einem Druck von 200 bar im Gewichtsverhältnis 100:43 gemischt, die Reaktionsmischung in das geschlossene Formwerkzeug eingespritzt und dort aufschäumen gelassen.

Die erhaltene Armaturentafel wurde nach 3,5 Minuten entformt und danach 1 Stunde bei 80°C gelagert. Einfallstellen konnten keine ermittelt werden. Nach 24 Stunden zeigte der Formkörper eine ausgezeichnete Haftung zwischen dem PU-Halbhartschaumstoff und PVC/ABS-Folie.

Nach der beschriebenen Verfahrensweise konnten problemlos 30 Armaturentafeln lunkerfrei hergestellt werden. Danach wurde der Reihenversuch abgebrochen.

Die Reaktionsmischung besaß eine Abbindezeit von 70 Sekunden und eine Steigzeit von 105 Sekunden Der PU-Schaumstoff wies eine Dichte, freigeschäumt, von 76 g/l auf.

### Beispiel 2

A-Komponente: Mischung, die bestand aus
- 47,50 Gew.-Teilen: eines Blockpolyoxypropylen-polyoxyethylen-polyols mit einer Hydroxylzahl von 30 und einem Gehalt an endständig gebundenen Ethylenoxideinheiten von 5,9 Gew.-%, bezogen auf das Gewicht der Propylenoxideinheiten, erhalten durch Alkoxylierung einer Startermolekülmischung aus Glycerin und Wasser im Gewichtsverhältnis 1:0,98,
- 1,50 Gew.-Teilen: eines mit Glycerin gestarteten Polyoxyethylen (62,5 Gew.-%)-polyoxypropylen(27,5 Gew.-%)-polyoxyethylen(10 Gew.-%)-polyols mit einer Hydroxylzahl von 42,
- 42,3 Gew.-Teilen: eines mit Glycerin gestarteten Polyoxypropylen(86 Gew.-%)-polyoxyethylen (14 Gew.-%)-polyols mit der Hydroxylzahl von 28,
- 1,00 Gew.-Teilen: eines mit technischem Tripropylen-tetramin gestarteten Polyoxypropylen-polyols mit einer Hydroxyzahl von 394,
- 5,00 Gew.-Teilen: eines mit N,N-Dimethyl-diaminopropan-1,3 gestarteten Polyoxypropylen-polyols mit der Hydroxylzahl von 250,
- 0,5 Gew.-Teilen: Ricinolsäure,
- 2,2 Gew.-Teilen: Wasser und
- 1,0 Gew.-Teilen: eines sterisch gehinderten Amins als Antioxidans (Naugard® 445).

B-Komponente: analog Beispiel 1.

Die Herstellung des Formteils erfolgte analog den Angaben des Beispiels 1, wobei jedoch die A- und B-Komponenten im Gewichtsverhältnis 100:41,66 gemischt wurden.

Das nach 3 Minuten entformte Formteil zeigte keine Einfallstellen oder Lunker.

Die Reaktionsmischung besaß eine Abbindezeit von 78 Sekunden und eine Steigzeit von 108 Sekunden Der PU-Schaumstoff wies eine Dichte, freigeschäumt, von 66 g/l auf.

### Beispiel 3

A-Komponente: Mischung, die bestand aus
- 42,6 Gew.-Teilen: eines Blockpolyoxypropylen-polyoxyethylen-polyols mit einer Hydroxylzahl von 30 und einem Gehalt an endständig gebundenen Ethylenoxideinheiten von 5,9 Gew.-%, bezogen auf das Gewicht der Propylenoxideinheiten, erhalten durch Alkoxylierung einer Startermolekülmischung aus Glycerin und Wasser im Gewichtsverhältnis 1:0,98,
- 43,95 Gew.-Teilen: eines mit N,N-Dimethyldipropylen-triamin gestarteten Polyoxypropylen(86,5 Gew.-%)-polyoxyethylen(13,5 Gew.-%)-polyols mit der Hydroxylzahl 35,
- 3,3 Gew.-Teilen: eines Pfropfpolyether-polyols mit der Hydroxylzahl von 28, hergestellt durch eine radikalische, in situ Polymerisation aus einem mit Glycerin gestarteten Polyoxypropylen-polyoxyethylen-polyol als Pfropfgrundlage und einer Mischung aus Styrol und Acrylnitril im Gewichtsverhältnis 3:2 zur Bildung der Pfropfauflage (Lupranol® 4100 der BASF Aktiengesellschaft),
- 4,0 Gew.-Teilen: eines mit Glycerin gestarteten Polyoxyethylenpolyols mit einer Hydroxylzahl von 525 und einem Kaliumionengehalt von 470 ppm,
- 2,0 Gew.-Teilen: eines mit technischem Tetrapropylen-pentamin gestarteten Polyoxypropylen-polyols mit einer Hydroxylzahl von 386,
- 1,6 Gew.-Teilen: Ricinolsäure,
- 2,0 Gew.-Teilen: Wasser,
- 0,15 Gew.-Teilen: Schwarzpaste und
- 1,0 Gew.-Teilen: eines sterisch gehinderten Amins als Antioxidans (Naugard® 445).

B-Komponente: analog Beispiel 1

Die Herstellung einer Armaturentafel wurde analog den Angaben des Beispiels 1 durchgeführt, wobei jedoch die A- und B-Komponenten im Gewichtsverhältnis 100:45 gemischt wurden.

Die nach 2,5 Minuten entformte Armaturentafel zeigte keine Einfallstellen oder Lunker im PU-Halbhartschaumstoff.

Die Reaktionsmischung besaß eine Abbindezeit von 77 Sekunden und eine Steigzeit von 115 Sekunden. Der PU-Schaumstoff wies eine Dichte, freigeschäumt, von 79 g/l auf.

### Beispiel 4

A-Komponente: analog Beispiel 2, wobei jedoch anstelle von 1 Gew.-Teil des mit technischem Tripropylen-tetramin gestarteten Polyoxypropylen-polyols 1 Gew.-Teil eines mit N,N'-Bis-(3-aminopropyl)-ethylendiamin gestarteten Polyoxypropylen-polyols mit einer Hydroxylzahl von 352 eingesetzt wurde.

B-Komponente: analog Beispiel 1

Die Herstellung des Formteils wurde analog den Angaben des Beispiels 1 durchgeführt, wobei jedoch die A- und B-Komponenten im Gewichtsverhältnis 100:44 gemischt wurden.

Das nach 3 Minuten entformte Formteil zeigte keine Einfallstellen oder Lunker im PU-Schaumstoff.

Die Reaktionsmischung besaß eine Abbindezeit von 76 Sekunden und eine Steigzeit von 110 Sekunden. Der PU-Schaumstoff wies eine Dichte, freigeschäumt, von 76 g/l auf. Der Foggingwert nach DIN 75 201, Verfahren B betrug 0,03 mg.

### Vergleichsbeispiel

### Herstellung von PU-Hartschaumstoffen

A-Komponente: Mischung, die bestand aus
- 82,4 Gew.-Teilen: eines Polyoxypropylen-polyols mit einer Hydroxylzahl von 400, hergestellt unter Verwendung einer Startermolekülmischung aus Sucrose und Wasser,
- 3,6 Gew.-Teilen: Wasser,
- 10,9 Gew.-Teilen: Cyclopentan,
- 2,3 Gew.-Teilen: Dimethylaminocyclohexylamin und
- 0,8 Gew.-Teilen: eines Schaumstabilisators auf Silikonbasis (Tegostab® 8409 der Goldschmidt AG).

B-Komponente: analog Beispiel 1

Zur Herstellung eines Formkörpers wurden die A- und B-Komponenten im Gewichtsverhältnis 100:147,14 gemischt, die Reaktionsmischung in ein metallisches Formwerkzeug eingefüllt und aufschäumen und aushärten gelassen.

Das nach 3 Minuten entformte Formteil aus PU-Hartschaumstoff war spröde und technisch nicht verwertbar.

Die Reaktionsmischung besaß eine Startzeit von 14 Sekunden, eine Abbindezeit von 54 Sekunden und eine Steigzeit von 72 Sekunden. Der PU-Schaumstoff wies eine Dichte, freigeschäumt, von 25,4 g/l auf.

### Beispiel 5

A-Komponente: Mischung, die bestand aus
- 84,7 Gew.-Teilen: eines mit N,N'-Bis-(3-aminopropyl)-ethylendiamin gestarteten Polyoxypropylen-polyols mit einer Hydroxylzahl von 407,
- 3,6 Gew.-Teilen: Wasser,
- 10,9 Gew.-Teilen: Cyclopentan und
- 0,8 Gew.-Teilen: eines Schaumstabilisators auf Silikonbasis (Tegostab® 8409 der Goldschmidt AG).

B-Komponente: analog Beispiel 1

Die Herstellung des Formteils wurde analog den Angaben des Vergleichsbeispiels durchgeführt, wobei jedoch die A- und B-Komponenten im Gewichtsverhältnis 100:151,16 gemischt wurden.

Der nicht spröde PU-Hartschaumstoff des nach 3 Minuten entformten, technisch nutzbaren Formteils war äußerst feinzellig.

Die Reaktionsmischung besaß eine Startzeit von 8 Sekunden, eine Abbindezeit von 23 Sekunden und eine Steigzeit von 37 Sekunden. Der PU-Schaumstoff wies eine Dichte, freigeschäumt, von 25,8 g/l auf.

## Patentansprüche

1. Verfahren zur Herstellung von Polyurethan-Schaumstoffen durch Umsetzung von
a) mindestens einem organischen Polyisocyanat mit
b) mindestens einer höhermolekularen Polyhydroxylverbindung mit mindestens zwei reaktiven Wasserstoffatomen und
c) gegebenenfalls niedermolekularen Kettenverlängerungsund/oder Vernetzungsmitteln
in Gegenwart von
d) Treibmitteln,
**dadurch gekennzeichnet, daß** man als Polyhydroxylverbindungen (b) Polyoxyalkylen-polyol (b1) mit einer Hydroxylzahl von 30 bis 500 verwendet, erhältlich durch Alkoxylierung mindestens eines Startermoleküls aus der Gruppe N,N'-Bis(3-aminopropyl)-ethylen-diamin, Tripropylen-tetramin und Tetrapropylen-pentamin mit mindestens einem Alkylenoxid.

2. Verfahren nach Anspruch 1, **dadurch gekennzeichnet, daß** man als Tripropylen-tetramin eine technische Tripropylen-tetraminmischung verwendet, die enthält
H₂N―CH₂CH₂CH₂―NH―CH₂CH₂CH₂―NH₂, 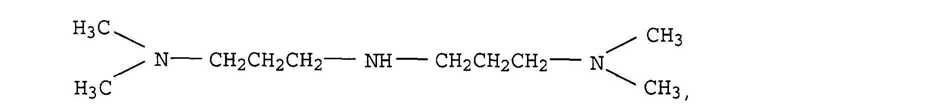
N(CH₂CH₂CH₂NH₂)₃,
H₂N―CH₂CH₂CH₂―NH―CH₂CH₂CH₂―NH―CH₂CH₂CH₂NH₂
und
CH₃CH₂CH₂―NR―CH₂CH₂CH₂―NH―CH₂CH₂CH₂―NH―CH₂CH₂CH₃

3. Verfahren nach Anspruch 1, **dadurch gekennzeichnet, daß** man als Tetrapropylen-pentamin eine technische Tetrapropylen-pentamin-Mischung verwendet, die enthält
N(CH₂CH₂CH₂― NH₂)₃,
H₂N―(CH₂)₃―NH―(CH₂)₃―NH―(CH₂)₃―NH₂ 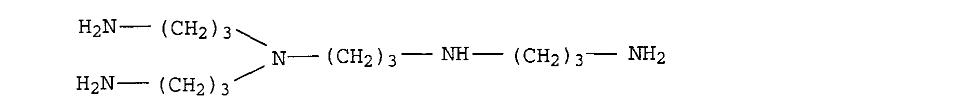
H₂N―(CH₂)₃―NH―(CH₂)₃―NH―(CH₂)₃―NH―(CH₂)₃―NH₂
und

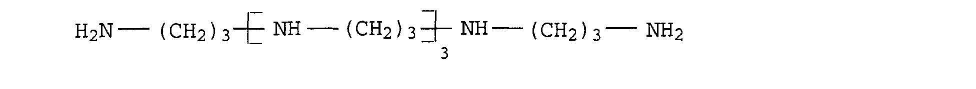

4. Verfahren nach Anspruch 1, **dadurch gekennzeichnet, daß** man als Alkylenoxide Ethylenoxid oder 1,2-Propylenoxid oder Ethylenoxid und 1,2-Propylenoxid verwendet.

5. Verfahren nach Anspruch 1, **dadurch gekennzeichnet, daß** man als Polyhydroxylverbindungen Mischungen verwendet, die enthalten
b1) mindestens ein Polyoxyalkylen-polyol mit einer Hydroxylzahl von 30 bis 500, erhältlich durch Alkoxylierung mindestens eines Startermoleküls aus der Gruppe N,N'-Bis-(3-aminopropyl)ethylen-diamin, Tripropylen-tetramin und Tetrapropylen-pentamin oder ihren technischen Mischungen mit mindestens einem Alkylenoxid und
b2) mindestens eine Polyhydroxylverbindung mit einer Funktionalität von 2 bis 8 und einer Hydroxylzahl von 15 bis 500, wobei Polyoxyalkylen-polyole gemäß (b1) ausgenommen sind.

6. Verfahren nach Anspruch 1, **dadurch gekennzeichnet, daß** man als Polyhydroxylverbindungen Mischungen verwendet, die enthalten, bezogen auf das Gesamtgewicht von (b1) und (b2),
b1) 0,1 bis 50 Gew.-% mindestens eines Polyoxyalkylen-polyols mit einer Hydroxylzahl von 30 bis 500, erhältlich durch Alkoxylierung mindestens eines Startermoleküls aus der Gruppe N,N'-Bis-(3-aminopropyl)ethylen-diamin, Tripropylen-tetramin und Tetrapropylen-pentamin oder ihren technischen Mischungen mit mindestens einem Alkylenoxid und
b2) 99,9 bis 50 Gew.-% mindestens einer Polyhydroxylverbindung mit einer Funktionalität von 2 bis 8 und einer Hydroxylzahl von 15 bis 500, wobei Polyoxyalkylen-polyole gemäß (b1) ausgenommen sind.

7. Verfahren nach Anspruch 1, **dadurch gekennzeichnet, daß** man als Treibmittel Wasser verwendet.

8. Verfahren nach Anspruch 1, **dadurch gekennzeichnet, daß** man zur Herstellung der Polyurethan-Schaumstoffe
e) Katalysatoren und
f) Zusatzstoffe
mitverwendet.

9. Verfahren nach Anspruch 1, **dadurch gekennzeichnet, daß** man zur Herstellung der Polyurethan-Schaumstoffe als Zusatzstoffe Ricinolsäure, Hydroxyfettsäuren und/oder Dialkylphthalate mit 4 bis 20 Kohlenstoffatomen im Alkylrest mitverwendet.

## Claims

1. A process for the production of polyurethane foams by reacting
a) at least one organic polyisocyanate with
b) at least one relatively high-molecular-weight polyhydroxyl compound containing at least two reactive hydrogen atoms and
c) if desired, low-molecular-weight chain extenders and/or crosslinking agents,
in the presence of
d) blowing agents,
wherein the polyhydroxyl compound (b) is a polyoxyalkylene-polyol (b1) having a hydroxyl number of from 30 to 500, obtainable by alkoxylation of at least one initiator molecule from the group consisting of N,N'-bis(3-aminopropyl)ethylenediamine, tripropylenetetramine and tetrapropylenepentamine using at least one alkylene oxide.

2. A process as claimed in claim 1, wherein the tripropylenetetramine used is a technical-grade tripropylenetetramine mixture comprising
H₂N―CH₂CH₂CH₂―NH―CH₂CH₂CH₂―NH₂, 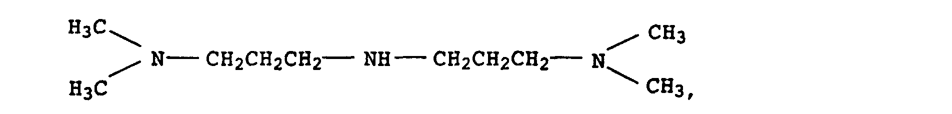
N(CH₂CH₂CH₂NH₂)₃,
H₂N―CH₂CH₂CH₂―NH―CH₂CH₂CH₂―NH―CH₂CH₂CH₂NH₂
and
CH₃CH₂CH₂―NH―CH₂CH₂CH₂―NH―CH₂CH₂CH₂―NH―CH₂CH₂CH_{3.}

3. A process as claimed in claim 1, wherein the tetrapropylenepentamine used is a technical-grade tetrapropylenepentamine mixture comprising
N(CH₂CH₂CH₂―NH₂)₃,
H₂N―(CH₂)₃―NH―(CH₂)₃―NH―(CH₂)₃―NH₂ 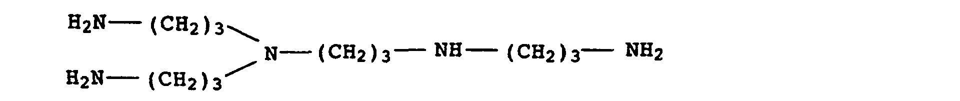
H₂N―(CH₂)₃―NH―(CH₂)₃―NH―(CH₂)₃―NH―(CH₂)₃―NH₂
and

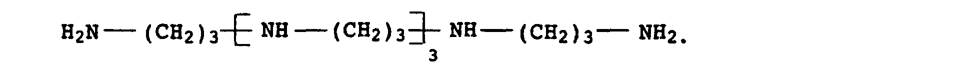

4. A process as claimed in claim 1, wherein the alkylene oxide(s) is (are) ethylene oxide or 1,2-propylene oxide or ethylene oxide and 1,2-propylene oxide.

5. A process as claimed in claim 1, wherein the polyhydroxyl compound used is a mixture comprising
b1) at least one polyoxyalkylene-polyol having a hydroxyl number of from 30 to 500, obtainable by alkoxylation of at least one initiator molecule from the group consisting of N,N'-bis(3-aminopropyl)ethylenediamine, tripropylenetetramine and tetrapropylenepentamine, or technical-grade mixtures thereof, using at least one alkylene oxide and
b2) at least one polyhydroxyl compound having a functionality of from 2 to 8 and a hydroxyl number of from 15 to 500, with the exception of polyoxyalkylene-polyols as defined in (bl).

6. A process as claimed in claim 1, wherein the polyhydroxyl compound used is a mixture comprising, based on the total weight of (b1) and (b2),
b1) from 0.1 to 50 % by weight of at least one polyoxyalkylene-polyol having a hydroxyl number of from 30 to 500, obtainable by alkoxylation of at least one initiator molecule from the group consisting of N,N'-bis(3-aminopropyl)ethylenediamine, tripropylenetetramine and tetrapropylenepentamine, or technical-grade mixtures thereof, using at least one alkylene oxide and
b2) from 99.9 to 50 % by weight of at least one polyhydroxyl compound having a functionality of from 2 to 8 and a hydroxyl number of from 15 to 500, with the exception of polyoxyalkylene-polyols as defined in (b1).

7. A process as claimed in claim 1, wherein the blowing agent is water.

8. A process as claimed in claim 1, wherein the polyurethane foams are produced in the presence of
e) catalysts and
f) additives.

9. A process as claimed in claim 1, wherein the polyurethane foams are produced in the presence of ricinoleic acid, hydroxyfatty acids and/or dialkyl phthalates having 4 to 20 carbon atoms in the alkyl radical as additives.

## Revendications

1. Procédé pour la préparation de mousses de polyuréthanne par réaction de
a) au moins un polyisocyanate organique avec
b) au moins un composé polyhydroxylé de masse moléculaire élevée ayant au moins deux atomes d'hydrogène réactifs et
c) éventuellement des agents d'allongement de chaîne et/ou de réticulation de faible masse moléculaire
en présence de
d) des agents d'expansion,
**caractérisé par le fait qu'**on utilise comme composés polyhydroxylés (b) du polyoxyalkylène-polyol (b1) ayant un indice d'hydroxyle de 30 à 500, pouvant être obtenu par alcoxylation d'au moins une molécule d'initiateur choisi dans le groupe de la N,N'-bis-(3-aminopropyl)éthylène-diamine, la tripropylène-tétramine et la tétrapropylène-pentamine avec au moins un oxyde d'alkylène.

2. Procédé selon la revendication 1, **caractérisé par le fait qu'**on utilise comme tripropylène-tétramine un mélange technique de tripropylène-tétramine qui contient
H₂N―CH₂CH₂CH₂―NH―CH₂CH₂CH₂―NH₂, 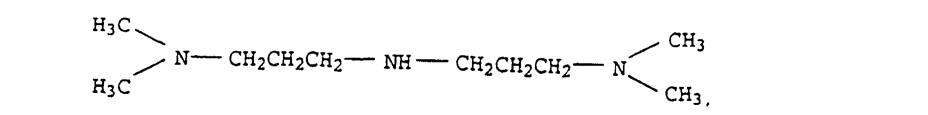
N(CH₂CH₂CH₂NH₂)₃,
H₂N―CH₂CH₂CH₂―NH―CH₂CH₂CH₂―NH―CH₂CH₂CH₂NH₂
et
CH₃CH₂CH₂―NH―CH₂CH₂CH₂―NH ―CH₂CH₂CH₂―NH―CH₂CH₂CH₃

3. Procédé selon la revendication 1, **caractérisé par le fait qu'**on utilise comme tétrapropylène-pentamine un mélange technique de tétrapropylène-pentamine qui contient
N(CH₂CH₂CH₂―NH₂)₃,
H₂N―(CH₂)₃―NH―(CH₂)₃―NH―(CH₂)₃―NH₂ 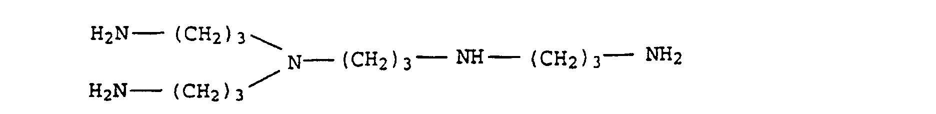
H₂N―(CH₂)₃―NH―(CH₂)₃-NH―(CH₂)₃―NH―(CH₂)₃―NH₂
et

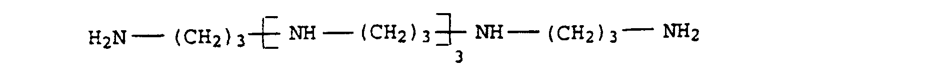

4. Procédé selon la revendication 1, **caractérisé par le fait qu'**on utilise comme oxydes d'alkylène l'oxyde d'éthylène ou l'oxyde de 1,2-propylène, ou l'oxyde d'éthylène et l'oxyde de 1,2-propylène.

5. Procédé selon la revendication 1, **caractérisé par le fait qu'**on utilise comme composés polyhydroxylés des mélanges qui contiennent
b1) au moins un polyoxyalkylène-polyol ayant un indice d'hydroxyle de 30 à 500, pouvant être obtenu par alcoxylation d'au moins une molécule d'initiateur choisi dans le groupe de la N,N'-bis-(3-amino-propyl)-éthylène-diamine, la tripropylène-tétramine et la tétrapropylène-pentamine ou leurs mélanges techniques, avec au moins un oxyde d'alkylène et
b2) au moins un composé polyhydroxylé ayant une fonctionnalité de 2 à 8 et un indice d'hydroxyle de 15 à 500, à l'exception des polyoxyalkylène-polyols selon (b1).

6. Procédé selon la revendication 1, **caractérisé par le fait qu'**on utilise comme composés polyhydroxylés des mélanges qui contiennent, par rapport au poids total de (b1) et (b2),
b1) 0,1 à 50 % en poids d'au moins un polyoxyalkylène-polyol ayant un indice d'hydroxyle de 30 à 500, pouvant être obtenu par alcoxylation d'au moins une molécule d'initiateur choisi dans le groupe de la N,N'-bis-(3-aminopropyl)éthylène-diamine, la tripropylène-tétramine et la tétrapropylène-pentamine ou leurs mélanges techniques, avec au moins un oxyde d'alkylène et
b2) 99,9 à 50 % en poids d'au moins un composé polyhydroxylé ayant une fonctionnalité de 2 à 8 et un indice d'hydroxyle de 15 à 500, à l'exception des polyoxyalkylène-polyols selon (b1).

7. Procédé selon la revendication 1, **caractérisé par le fait qu'**on utilise l'eau comme agent d'expansion.

8. Procédé selon la revendication 1, **caractérisé par le fait qu'**on utilise en outre pour la préparation des mousses de polyuréthanne
e) des catalyseurs et
f) des additifs.

9. Procédé selon la revendication 1, **caractérisé par le fait qu'**on utilise en outre pour la préparation des mousses de polyuréthanne, en tant qu'additifs, de l'acide ricinoléique, des acides gras hydroxylés et/ou des dialkylphtalates ayant 4 à 20 atomes de carbone dans le reste alkyle.
